# EUROPÄISCHE PATENTSCHRIFT

(11) **EP 4 021 981 B1**
(45) Veröffentlichungstag und Bekanntmachung des Hinweises auf die Patenterteilung: **22.02.2023**
(21) Anmeldenummer: 19805285.4
(22) Anmeldetag: 18.11.2019
(51) Int. Cl.: C08L 83/04, F24S 80/20, C09K 5/10

(54) **METHYLPOLYSILOXANMISCHUNGEN ALS WÄRMETRÄGERFLUID**
METHYL POLYSILOXANE MIXTURES AS A HEAT-CARRIER FLUID
MÉLANGES DE MÉTHYLPOLYSILOXANE EN TANT QUE FLUIDE CALOPORTEUR

(43) Veröffentlichungstag der Anmeldung: 06.07.2022
(73) Patentinhaber: Wacker Chemie AG, 81737 München (DE)
(72) Erfinder: MOXTER, Maximilian, 81737 München (DE); HAFFENDORN, Julia, 80639 München (DE); KOKOTT, Lukas, 84518 Garching (DE); WEIDNER, Richard, 84489 Burghausen (DE)
(74) Vertreter: Fritz, Helmut
(86) Internationale Anmeldenummer: PCT/EP2019/081642
(87) Internationale Veröffentlichungsnummer: WO 2021/098940

(56) Entgegenhaltungen:
- US-A- 4 193 885
- LÓPEZ-MARTÍN RAFAEL ET AL: "On-site comparison of flowmeters installed in a parabolic-trough solar collector test facility", MEASUREMENT, INSTITUTE OF MEASUREMENT AND CONTROL. LONDON, GB, Bd. 92, 18. Juni 2016 (2016-06-18), Seiten 271-278, XP029644885, ISSN: 0263-2241, DOI: 10.1016/J.MEASUREMENT.2016.06.033
- Christine Roberts ET AL: "SANDIA REPORT Physical Properties of Low-Molecular Weight Polydimethylsiloxane Fluids", , 28. Februar 2017 (2017-02-28), XP055717865, Gefunden im Internet: URL:https://prod-ng.sandia.gov/techlib-noa uth/access-control.cgi/2017/171242.pdf [gefunden am 2020-07-24]

## Beschreibung

Der Gegenstand der vorliegenden Erfindung ist die Verwendung von Methylpolysiloxanmischungen als Wärmeträgerfluid sowie spezielle Methylpolysiloxanmischungen und ein Verfahren zum Betreiben einer CSP-Anlage mit diesen Mischungen.

Aktuell werden niedrigviskose Mischungen von linearen und cyclischen Methylpolysiloxanen als Wärmeträgeröl (z.B. HELISOL^{®} 5A) in CSP-Anlagen (CSP = Concentrated Solar Power, Solarthermisches Kraftwerk mit Strahlungsbündelung) eingesetzt. Als Konsequenz der niedrigen Viskosität enthält das Öl durch die Äquilibrierung größere Anteile niedrigsiedender Bestandteile, sodass einerseits der kritische Punkt der Mischung unterhalb der Betriebstemperatur liegt, andererseits der Betriebsdruck der Anlage bei 20 bar und höher liegt.

Zur Gewährleistung eines von vorneherein konstant hohen Betriebsdrucks bediente man sich im Stand der Technik z.B. dem Zusatz von niedrigsiedenden Cyclen zum Wärmeträgeröl. DE102012211258A1 (WO2014/001081) offenbart dazu Mischungen von wenigstens zwei Methylpolysiloxanen, ausgewählt aus linearen Verbindungen der allgemeinen Formel (I)

Me₃SiO-(Me₂SiO)ₓ-SiMe₃ (I),

und cyclischen Verbindungen der allgemeinen Formel (II)

[Me₂SiO]_{y} (II),

wobei die Mischung mindestens ein lineares Methylpolysiloxan der allgemeinen Formel (I) und mindestens ein cyclisches Methylpolysiloxan der allgemeinen Formel (II) enthält, wobei x Werte größer oder gleich Null aufweist und der mit den Stoffmengenanteilen gewichtete arithmetische Mittelwert von x über alle linearen Methylpolysiloxane zwischen 3 und 20 liegt, wobei y Werte größer oder gleich 3 aufweist und der mit den Stoffmengenanteilen gewichtete arithmetische Mittelwert von y über alle cyclischen Methylpolysiloxane zwischen 3 und 6 liegt, wobei das Zahlenverhältnis der Me₃Si-Kettenendgruppen (M) in den Verbindungen der allgemeinen Formel (I) zur Summe aus Me₂SiO-Einheiten (D) in den Verbindungen der allgemeinen Formeln (I) und (II) mindestens 1:2 und höchstens 1:10 ist, die Summe der Anteile aller cyclischen Methylpolysiloxane der allgemeinen Formel (II) mindestens 10 Massen-% und höchstens 40 Massen-% beträgt, und die Mischung bei 25 °C flüssig ist und eine Viskosität von weniger als 100 mPa*s aufweist, zudem müssen die einzelnen Methylpolysiloxane der Formeln (I) und (II) in konkreten Anteilen vorliegen. Derartige Siloxanmischungen eignen sich als Wärmeträgerflüssigkeit für CSP-Anlagen mit einer Betriebstemperatur im Bereich von 200 bis 550 °C.

WO2019/072403 offenbart eine Methylpolysiloxan-Mischung, die Methylpolysiloxane mit Me₃Si-Kettenendgruppen (M) und Me₂SiO-Einheiten (D) aufweist, wobei das molare M:D-Verhältnis in der Methylpolysiloxan-Mischung 1:5,5 bis 1:15 beträgt und die Summe der Anteile aller cyclischen Methylpolysiloxane 25 bis 55 Massen-% beträgt. Diese Mischung eignet sich als Wärmeträgerfluid in CSP-Anlagen. Die Mischung erreicht erst bei Temperaturen über 400 °C den kritischen Punkt. Von Mischungen mit einem höheren M:D-Verhältnis wird abgeraten, da bei höherer Ausgangskettenlänge der Moleküle die Viskosität durch Bildung von T-Einheiten und die damit einhergehende Molmassenerhöhung der Moleküle bei der Betriebstemperatur stärker ansteigt. Dies würde eine deutlich höhere Pumpleistung erfordern und möglicherweise zu nicht mehr pumpbaren Mischungen führen.

WO2010/103103 offenbart die Verwendung von niedermolekularen Polyorganosiloxanen der Formel MₐD_{b}T_{c}Qₑ mit a = 2-6, b = 0-10, c = 0-3, d = 0-2, c+d = 1-2, a/(c+d) = > 2, mit M = R₃SiO_{1/2} und D = R₂SiO_{2/2} und T = RSiO_{3/2} und Q = SiO_{4/2}, worin R ausgewählt wird aus der Gruppe bestehend aus: aliphatischen und/oder aromatischen Resten mit bis zu 30 Kohlenstoffatomen, die ein oder mehrere Sauerstoffatome, ein oder mehrere Halogenatome sowie eine oder mehrere Cyanogruppen aufweisen können, mit der Maßgabe, dass mindestens einer der Reste R in M (endständige Gruppe) über ein Kohlenstoffatom an Silizium gebunden ist und mindestens einer der Reste R in M mindestens zwei Kohlenstoffatome aufweist, als Kraft- und/oder Wärmeübertragungsflüssigkeit. Als technische Aufgabe wird angegeben, dass weniger Quellung bei Dichtungen erreicht werden sollte.

LOPEZ-MARTIN RAFAEL ET AL: "On-site comparison of flowmeters installed in a parabolic-trough solar collector test facility", MEASUREMENT, INSTITUTE OF MEASUREMENT AND CONTROL. LONDON, GB, Bd. 92, 18. Juni 2016 (2016-06-18), Seiten 271-278, XP029644885, ISSN: 0263-2241, DOI: 10.1016/J.MEASUREMENT.2016.06.033 offenbart die Verwendung von Methylpolysiloxanmischungen, die "Siltherm 800" enthalten, als Wärmeträgerfluid in solarthermischen Kraftwerken mit Betriebstemperaturen in einem Bereich von -40°C bis 400 °C. "Siltherm 800" ist gemäß https:fiwww.chempoint.comiproducts/dowlsyltherm-siliconethermal-fluidaisyltherm-siiicone-therrnal-fluidsisyltherm-800 ein Polydimethylsiloxan mit Viskosität = 51 mPa.s.

EP1473346 offenbart ein Gemisch aus wenigstens zwei Dimethylpolysiloxanen, die ausgewählt sind aus Dimethylpolysiloxanen der Formel (1) oder (2)

Me₃SiO-(Me₂SiO)ₘ-SiMe₃ (1)

[Me₂SiO]ₙ (2),

wobei m eine ganze Zahl mit 0 ≤ m ≤ 10 und n eine ganze Zahl mit 3 ≤ n ≤ 10 ist, wobei eines der Dimethylpolysiloxane Dodecamethylpentasiloxan ist, das in einem Anteil von 15-95 Gew.-% bezogen auf das Gesamtgewicht der Mischung enthalten ist und die Mischung einen Feuchtigkeitsgehalt von höchstens 50 ppm bezogen auf das Gesamtgewicht der Mischung aufweist. Das Gemisch wird als Kühlmittel verwendet, es weist eine Viskosität von ≤ 2 mm²/s bei 25 °C und von ≤ 300 mm2/s bei -100 °C auf.

Der kritische Punkt beschreibt den thermodynamischen Zustand eines Systems, in dem alle koexistierenden Phasen in ihren physikalischen Eigenschaften/Größen übereinstimmen. Im Fall eines Substanzgemisches definiert sich der kritische Punkt anhand dessen molekularer Zusammensetzung und zeichnet sich dabei durch eine signifikanten Einbruch der Dichte aus. Methylpolysiloxane mit niedrigerer molarer Masse, insbesondere lineare Methylpolysiloxane MM (Si2), MDM (Si3), MD₂M (Si4), etc., und cyclische Methylpolysiloxane D3, D4, D5, etc., gehen bereits bei niedrigerer Temperatur in den überkritischen Zustand über (siehe Tabelle 1). So liegt bei den linearen Methylpolysiloxanen bis Si8 und bei den cyclischen Methylpolysiloxanen bis D8 die kritische Temperatur unterhalb der angestrebten Betriebstemperatur eines Wärmeträgerfluids von 425 °C.

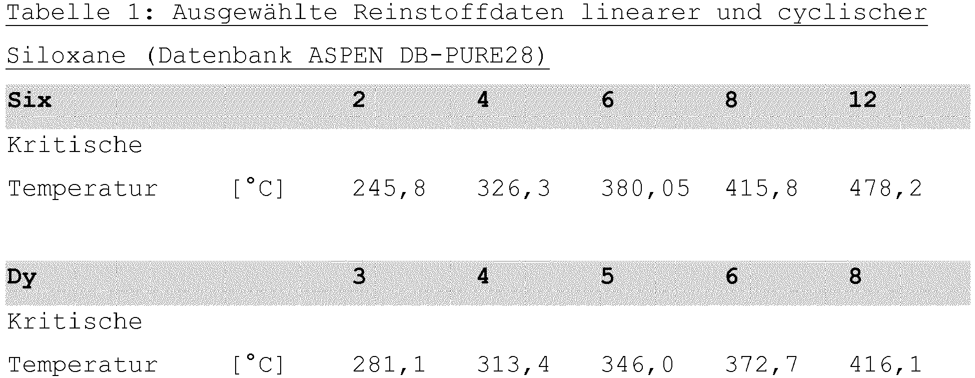

Unter thermischer Belastung lagern Methylpolysiloxane um, sie äquilibrieren. Unabhängig von der Ausgangszusammensetzung ergibt sich eine Methylpolysiloxanmischung aus linearen Methylpolysiloxanen (Si2, Si3, Si4, etc...) und cyclischen Dimethylpolysiloxanen (D3, D4, D5, etc...), die im thermischen thermodynamischen Gleichgewicht liegt. Die Lage dieses Gleichgewichts ergibt sich aus der maximalen Betriebstemperatur, der die Methylpolysiloxanmischung ausgesetzt ist, und aus dem molaren M:D-Verhältnis der Methylpolysiloxanmischung. Bei hohen Temperaturen, wie beispielsweise 425 °C, stellt sich das Gleichgewicht innerhalb von 1-2 Monaten (Dauerbelastung) ein. Bei niedrigeren Temperaturen stellt sich ein anderes Gleichgewicht ein; bei 400°C dauert die Gleichgewichtseinstellung allerdings schon 2-4 Monate. Daher stellt sich im realen Betrieb für ein Wärmeträgerfluid, insbesondere im CSP-Kraftwerksbetrieb nach einiger Zeit immer das Gleichgewicht der höchsten maximalen Betriebstemperatur ein, da die Geschwindigkeitskonstante zur Einstellung des Gleichgewichts bei höherer Temperatur größer ist als die Geschwindigkeitskonstante zur Einstellung des Gleichgewichts bei niedrigerer Temperatur (entspricht Rückreaktion/Rückäquilibrierung).Die Verweilzeit des Wärmeträgerfluids im realen CSP-Kraftwerksbetrieb bei maximaler Betriebstemperatur ist verhältnismäßig kurz (Receiverende bis Verdampfer). Im Verdampfer wird das Wärmeträgerfluid sehr schnell auf 300°C abgekühlt, die Äquilibrierung findet bei diesen Temperaturen nur noch sehr langsam statt.

Es besteht somit die Aufgabe, Methylpolysiloxanmischungen bereitzustellen, die
(a) im Ausgangszustand eine geringe Viskosität trotz höhermolekularer Bestandteile - auch bei Temperaturen unterhalb 0 °C - aufweisen,
(b) den kritischen Punkt oberhalb der Betriebstemperatur von CSP-Anlagen, idealerweise oberhalb von 425 °C, aufweisen,
(c) im äquilibrierten Zustand einen geringen Dampfdruck (< 20 bar) aufweisen,
(d) im äquilibrierten Zustand noch eine Viskosität < 20 mPa*s aufweisen, und
(e) trotz höhermolekularer Bestandteile aufgrund von nicht signifikanter Degradation in den Eigenschaftsprofilen (z.B. Viskosität) langzeitstabil und somit wirtschaftlich einsetzbar sind.

Überraschenderweise wurde gefunden, dass in höhermolekularen Methylpolysiloxanen - wie den erfindungsgemäßen Methylpolysiloxanmischungen - unter CSP-relevanten Bedingungen von 425 °C deutlich mehr Cyclen gebildet werden als in den von vornherein niedermolekularen Mischungen. Als Konsequenz hiervon ist der Viskositätsabfall der höhermolekularen Mischungen deutlich ausgeprägter als bisher bekannt. Gleichzeitig ist der Dampfdruck der äquilibrierten Gemische geringer als bei einer niedermolekularen Mischung, obwohl die höhermolekularen Mischungen deutlich mehr leichtsiedende Cyclen bilden. Des Weiteren zeigen die Messungen, dass die erfindungsgemäßen Methylpolysiloxanmischungen im Bereich der Betriebstemperatur ebenfalls unterkritisch sind.

Diese Aspekte waren bisher nicht bekannt und stellen damit einen Vorteil für eine Nutzung höhermolekularer Methylpolysiloxane als Wärmeträgerfluid in CSP-Anlagen dar.

Der Mueller-Rochow-Prozess ist auf die Darstellung des difunktionellen Präkursors Dimethyldichlorsilan ausgelegt, Trimethylchlorsilan als Präkursor für M-Einheiten stellt dem gegenüber eine Minderkomponente dar. Siloxanmischungen mit höherem M:D-Verhältnis sind ressourceneffizienter, da sie mehr Dimethylsilyloxy-Gruppen (D-Einheiten) und weniger Trimethylsilyloxy-Gruppen (M-Einheiten) enthalten als die gleiche Menge eines vergleichbaren niedrigviskosen Polydimethylsiloxan-Gemisches.

Die technische Aufgabe wird gelöst durch die Verwendung von Methylpolysiloxanmischungen, wie sie in den Ansprüchen 1-5 beschrieben ist, sowie durch Methylpolysiloxanmischungen, wie sie in den Ansprüchen 6-11 beschrieben sind.

Ein Gegenstand der Erfindung ist die Verwendung von Methylpolysiloxanmischungen, die
(a) lineare Methylpolysiloxane **MDₓM** enthalten, worin **x** eine ganze Zahl ist mit 0 ≤ **x** ≤ 100, und wobei die Mischungen ein molares M:D-Verhältnis von 1:15,5 bis 1:30 aufweisen; oder
(b) lineare Methylpolysiloxane **MDₓM,** worin **x** eine ganze Zahl ist mit 0 ≤ **x** ≤ 80 und cyclische Dimethylpolysiloxane **D_{y},** worin **y** eine ganze Zahl ≥ 3 ist, enthalten, wobei die Summe der Anteile aller cyclischen Dimethylpolysiloxane **D_{y}** 10-95 Gew.-% beträgt, und wobei die Mischungen ein molares M:D-Verhältnis von 1:10,5 bis 1:30 aufweisen,
als Wärmeträgerfluid in solarthermischen Kraftwerken (CSP) mit Betriebstemperaturen in einem Bereich von 300 bis 500 °C, bevorzugt in einem Bereich von 380 °C bis 450 °C, insbesondere bei Temperaturen im Bereich von 400 °C bis 430 °C.

Bevorzugt werden Methylpolysiloxanmischungen eingesetzt, für die gilt:
(a) die Mischungen weisen ein molares M:D-Verhältnis von 1:15,5-1:25 auf; oder
(b) die Mischungen enthalten lineare Methylpolysiloxane **MDₓM,** worin **x** eine ganze Zahl ist mit 0 ≤ **x** ≤ 29, und cyclische Dimethylpolysiloxane **D_{y},** worin **y** eine ganze Zahl ist mit 3 ≤ **y** ≤10, wobei die Summe der Anteile aller cyclischen Dimethylpolysiloxane **D_{y}** in einem Bereich von 60-80 Gew.-% liegt, und wobei die Mischungen ein molares M:D-Verhältnis von 1:11 bis 1:20 aufweisen.

Besonders bevorzugt werden Methylpolysiloxanmischungen eingesetzt, für die gilt:
a) die Summe der Anteile aller cyclischen Dimethylpolysiloxane **Dy** liegt in einem Bereich von 0-1 Gew.-%, das Zahlenmittel ***M̅ₙ*** der Mischung liegt in einem Bereich von 400 bis 3000 g/mol und das Gewichtsmittel ***M̅_{w}*** der Mischung liegt in einem Bereich von 1000 bis 5000 g/mol; oder
b) die Mischungen enthalten lineare Methylpolysiloxane **MDₓM,** worin **x** eine ganze Zahl ist mit 0 ≤ **x** ≤ 29, und cyclische Dimethylpolysiloxane **D_{y},** worin **y** eine ganze Zahl ist mit 3 ≤ **y** ≤10, wobei die Summe der Anteile aller cyclischen Dimethylpolysiloxane **D_{y}** in einem Bereich von 60-80 Gew.-% liegt, und wobei die Mischungen ein molares M:D-Verhältnis von 1:11 bis 1:20 aufweisen und das Zahlenmittel ***M̅ₙ*** der Mischung in einem Bereich von 100 bis 2000 g/mol und das Gewichtsmittel ***M̅_{w}*** der Mischung in einem Bereich von 100 bis 6000 g/mol liegt. Herstellungsbedingt können die genannten Methylpolysiloxanmischungen geringe Mengen an T- und/oder Q-Gruppen enthalten, wobei die Mischungen höchstens 150 ppm T-Gruppen und höchstens 100 ppm Q-Gruppen enthalten. Bevorzugt enthalten die Methylpolysiloxanmischungen höchstens 100 ppm T-Gruppen und keine Q-Gruppen.

Ein weiterer Gegenstand der Erfindung sind Methylpolysiloxanmischungen, die lineare Methylpolysiloxane **MDₓM,** worin **x** eine ganze Zahl ist mit 0 ≤ **x** ≤ 80 und cyclische Dimethylpolysiloxane **D_{y},** worin **y** eine ganze Zahl ≥ 3 ist, enthalten, wobei die Summe der Anteile aller cyclischen Dimethylpolysiloxane **D_{y}** 10-95 Gew.-% beträgt, und wobei die Mischungen ein molares M:D-Verhältnis von 1:10,5 bis 1:30 aufweisen.

**MDₓM** bezeichnet üblicherweise lineare Methyl-endgestopperte Dimethylpolysiloxane der Formel **(I)**

**(CH₃)₃Si-O-[CH₃SiO]ₓ-Si(CH₃)₃** **(I),**

wobei **x** eine ganze Zahl ≥ 0 ist. Vereinfacht werden diese linearen Methylpolysiloxane auch **Six** genannt, wobei **Si2** für das Disiloxan **MM** steht, **Si3** für **MDM, Si4** für **MD₂M,** etc.

**D_{y}** bezeichnet üblicherweise cyclische Dimethylpolysiloxane der Formel **(II)**

**[CH₃SiO]_{y}** **(II),**

wobei **y** eine ganze Zahl ≥ 3 ist.

Bevorzugt sind solche Methylpolysiloxanmischungen, die lineare Methylpolysiloxane **MDₓM,** worin **x** eine ganze Zahl ist mit 0 ≤ **x** ≤ 29, und cyclische Dimethylpolysiloxane **D_{y},** worin **y** eine ganze Zahl ist mit 3 ≤ **y** ≤10, enthalten, wobei die Summe der Anteile aller cyclischen Dimethylpolysiloxane **D_{y}** in einem Bereich von 60-80 Gew.-% liegt, und wobei die Mischungen ein molares M:D-Verhältnis von 1:11 bis 1:20 aufweisen und das Zahlenmittel ***M̅ₙ*** der Mischungen in einem Bereich von 100 bis 2000 g/mol und das Gewichtsmittel ***M̅_{w}*** der Mischungen in einem Bereich von 100 bis 6000 g/mol liegt.

Besonders bevorzugt sind solche Methylpolysiloxanmischungen, wobei das Zahlenmittel ***M̅ₙ*** der Mischungen in einem Bereich von 200 bis 1600 g/mol liegt und das Gewichtsmittel ***M̅_{w}*** der Mischungen in einem Bereich von 200 bis 2200 g/mol liegt. Ganz besonders bevorzugt liegt das Zahlenmittel ***M̅ₙ*** der Mischungen in einem Bereich von 250 bis 1400 g/mol liegt und das Gewichtsmittel ***M̅_{w}*** der Mischungen liegt in einem Bereich von 250 bis 2000 g/mol.

Die erfindungsgemäßen Methylpolysiloxanmischungen weisen eine Viskosität bei 25 °C von ≤ 100 mPa*s und eine Viskosität bei - 40 °C von ≤ 300 mPa*s auf. Bevorzugt weisen sie eine Viskosität bei 25 °C von ≤ 50 mPa*s und eine Viskosität bei -40 °C von ≤ 200 mPa*s auf.

Die erfindungsgemäßen Methylpolysiloxanmischungen weisen im Gleichgewichtszustand eine Viskosität bei 25 °C von ≤ 20 mPa*s auf.

Die erfindungsgemäßen Methylpolysiloxanmischungen weisen ihren kritischen Punkt bei einer Temperatur von ≥ 430 °C auf.

Bevorzugt weisen sie ihren kritischen Punkt bei einer Temperatur von ≥ 440 °C auf.

Die erfindungsgemäßen Methylpolysiloxanmischungen weisen im Gleichgewichtszustand einen Dampfdruck von ≤ 20 bar bei 425 °C bei einem Füllgrad von 45 % auf, bevorzugt ist ein Dampfdruck von ≤ 18 bar, besonders bevorzugt von ≤ 17 bar.

Herstellungsbedingt können die erfindungsgemäßen Methylpolysiloxanmischungen geringe Mengen an T- und/oder Q-Gruppen enthalten, wobei die Mischungen höchstens 150 ppm T-Gruppen und höchstens 100 ppm Q-Gruppen enthalten. Bevorzugt enthalten die Methylpolysiloxanmischungen höchstens 100 ppm T-Gruppen und keine Q-Gruppen.

Erfindungsgemäße Methylpolysiloxanmischungen können hergestellt werden, indem Methylpolysiloxane **Six** oder **Dy** oder beliebige Gemische von solchen Methylpolysiloxanen in jedweder Reihenfolge zubereitet, gemischt und zueinander dosiert werden, gegebenenfalls auch mehrfach wiederholend, gegebenenfalls auch abwechselnd oder gleichzeitig, so dass die zuvor genannten Bedingungen für **x, y,** molares M:D-Verhältnis sowie Zahlenmittel und Gewichtsmittel erfüllt sind. Durch geeignete Verfahren, beispielsweise Destillation, können einzelne Methylpolysiloxane oder Methylpolysiloxan-Gemische auch wieder entfernt werden. Die Zusammensetzung der erfindungsgemäßen Methylpolysiloxanmischungen kann dabei durch die eingesetzten oder entfernten Mengen von Methylpolysiloxanen **Six** und **Dy** gesteuert werden. Das Verfahren kann bei Raumtemperatur und Umgebungsdruck durchgeführt werden, aber auch bei erhöhter oder erniedrigter Temperatur sowie erhöhtem oder erniedrigtem Druck.

Erfindungsgemäße Methylpolysiloxanmischungen können weiterhin hergestellt werden, indem geeignete Chlorsilane, Alkoxysilane oder Gemische von Chlorsilanen oder Alkoxysilanen hydrolysiert oder cohydrolysiert und anschließend von Nebenprodukten wie Chlorwasserstoff oder Alkoholen sowie gegebenenfalls von überschüssigem Wasser befreit werden. Optional können zu der erhaltenen Methylpolysiloxanmischung ein oder mehrere weitere Methylpolysiloxane hinzugefügt oder durch geeignete Verfahren, beispielsweise Destillation, über entfernt werden. Das Verfahren kann bei Raumtemperatur und Umgebungsdruck durchgeführt werden, aber auch bei erhöhter oder erniedrigter Temperatur sowie erhöhtem oder erniedrigtem Druck. Die Zusammensetzung der erfindungsgemäßen Methylpolysiloxanmischungen wird dabei durch das Verhältnis der eingesetzten und gegebenenfalls wieder entfernten Mengen von Silanen beziehungsweise Methylpolysiloxanen gesteuert.

Die vorstehend beschriebenen Verfahren können auch kombiniert werden. Sie können optional in Gegenwart eines oder mehrerer Lösungsmittel durchgeführt werden. Bevorzugt wird kein Lösungsmittel verwendet. Die eingesetzten Silane, Silangemische, Methylpolysiloxane und Methylpolysiloxangemische sind entweder kommerziell erhältliche Produkte der Silicon-Industrie, oder sie können durch literaturbekannte Syntheseverfahren hergestellt werden.

Die erfindungsgemäßen Methylpolysiloxanmischungen können gelöste oder suspendierte oder emulgierte Zusatzstoffe enthalten, um ihre Stabilität zu erhöhen oder ihre physikalischen Eigenschaften zu beeinflussen. Gelöste Metallverbindungen, beispielsweise Eisencarboxylate, können als Radikalfänger und Oxidationsinhibitoren die Haltbarkeit der Methylpolysiloxanmischungen erhöhen, insbesondere bei der Verwendung als Wärmeträgerfluid.

Suspendierte Zusatzstoffe, beispielsweise Kohlenstoff oder Eisenoxid, können physikalische Eigenschaften eines Wärmeträgers, beispielsweise die Wärmekapazität oder die Wärmeleitfähigkeit, verbessern.

Ein weiterer Gegenstand der Erfindung ist ein Verfahren zum Betreiben einer CSP-Anlage, dadurch gekennzeichnet, dass die erfindungsgemäßen Methylpolysiloxanmischungen als Wärmeträgerfluid eingesetzt werden und die Temperatur beim Anfahren der Anlage stufenweise erhöht wird. Dadurch wird erreicht, dass der Dampfdruck des Wärmeträgerfluids in der Äquilibrierungsphase unterhalb des Betriebsdruckes gehalten wird.

Bevorzugt wird ein Verfahren, bei dem das stufenweise Anfahren die folgenden Schritte umfasst:
a) Einstellung einer Starttemperatur, die 100 bis 200 °C unterhalb der maximalen Betriebstemperatur liegt, jedoch mindestens 100°C beträgt;
b) Halten der Starttemperatur bis ein konstanter Betriebsdruck für mindestens 3 Stunden eingehalten wird;
c) Erhöhung der Betriebstemperatur um einen Wert in einem Bereich von 5-150 °C, bevorzugt in einem Bereich von 25-100 °C, besonders bevorzugt in einem Bereich von 25-50 °C;
d) Halten der Temperatur bis ein konstanter Betriebsdruck für mindestens 3 Stunden eingehalten wird;
e) Wiederholen der Schritte c) und d) bis die maximale Betriebstemperatur erreicht ist.

### Beispiele

### Messmethoden

### 1. Bestimmung der Zusammensetzung der Methylpolysiloxanmischungen:

### Gaschromatographie (GC)

Die Zusammensetzung der Methylpolysiloxanmischungen wurde mittels GC bestimmt. Gerät: Agilent GC-3900 Gaschromatograph, Säule MXT5 (60 m × 0,28 mm, 0,25 pm), Trägergas Wasserstoff, Flussrate 1 ml/min, Injektor CP-1177, Split 1:50, Detektor FID 39XI 250 °C. Auswertung in Flächen-Prozent, Kalibrierung (Siloxane und n-Hexadecan) ergab, dass die Werte in Flächen-% denselben Werten in Gewichts-% entsprechen.

Basierend auf: Analysis of Large Linear and Cyclic Methylsiloxanes and Computer Calculation of the Chromatographic Data (Journal of Chromatographic Science 1966, 4, 347-349).

### Hochdruckflüssigchromatographie (HPLC)

Die Zusammensetzung der Methylpolysiloxanmischungen wurde mittels HPLC bestimmt. Gerät: Agilent LC System Series 1100, Degasser ERC 3215α, Detektor Agilent ELSD 385 mit Burgner Research MiraMist^{®} PTFE-Zerstäuber (40 °C Verdampfungstemperatur, 90 °C Zerstäubertemperatur, bei 1,2 Standardliter/min), Säule Accucore C30 (50 mm × 4,6 mm, 2,6 pm), linearer Solvens-Gradient von [Methanol/Wasser (75:25 v/v)]: Aceton beginnend mit 50:50 bis 100% Aceton innerhalb 160 min bei einer Flussrate von 2 mL/min. Auswertung in Flächen-%. Die Kalibrierung ergab, dass die Werte in Flächen-% denselben Werten in Gewichts-% entsprechen.

Basierend auf: "Separation of linear and cyclic poly(dimethylsiloxanes) with polymer high-performance liquid chromatography" (B. Durner, T. Ehmann, F.-M. Matysik in Monatshefte Chemie 2019, 150, 1603; https://doi.org/10.1007/s00706-019-02389-4).

Die quantitative Zusammensetzung der Methylpolysiloxanmischungen wurde durch Kombination der GC- und HPLC-Daten bestimmt. Hierfür wurde der Überschneidungsbereich beider Methoden für die Bestandteile von Si10 bis Si20 bzw. D10 bis D19 genutzt und jeweils ein Integralvergleich von Siₓ zu Siₓ₊ᵢ bzw. Dₓ zu Dₓ₊ᵢ in o.g. Bereichen vorgenommen. Im Bereich gleicher Intensitätsverhältnisse wurden die Daten kombiniert und mithilfe der o.g. Intensitätsfaktoren fortlaufen ergänzt und normiert. Die Kalibrierung ergab, dass die ermittelten Werte in Flächen-% denselben Werten in Gewichts-% entsprechen.

### Gelpermeationschromatographie (GPC)

Die Zusammensetzung der Methylpolysiloxanmischungen, sowie Zahlenmittel ***M̅ₙ*,** Gewichtsmittel ***M̅_{w}*,** und Polydispersität wurden mittels GPC bestimmt. Gerät: Iso Pump Agilent 1200, Autosampler Agilent 1200, Säulenofen Agilent 1260 Detektor, RID Agilent 1200, Säule Agilent 300 mm × 7,5 mm OligoPore Ausschluss 4500D, Säulenmaterial highly crosslinked Polystyrene/Divinylbenzene, Eluent Toluol, Flussrate 0,7 ml/min, Injektionsvolumen 10 µl, Konzentration 1 g/L (in Toluol), PDMS (Polydimethylsiloxan)-Kalibrierung (Mp 28500 D, Mp 25200 D, Mp 10500 D, Mp 5100 D, Mp 4160 D, Mp 1110 D, Mp 311 D). Auswertung in Flächen-%.

### 2. Messung des M-zu D-Verhältnisses (²⁹Si-NMR):

Die Bestimmung des Anteils an M-Gruppen (Kettenenden Me₃SiO_{1/2}-) und D-Gruppen (Kettenglieder -Me₂SiO_{2/2}-) erfolgte mittels Kernresonanzspektroskopie (²⁹Si-NMR; Bruker Avance IN HD 500 (²⁹Si: 99.4 MHz) Spektrometer mit BBO 500 MHz S2 Probenkopf; inverse gated-Pulssequenz (NS = 3000); 150 mg Methylpolysiloxanmischungen in 500 µl einer 4×10⁻² molaren Lösung von Cr(acac)₃ in CD₂Cl₂.

### 3. Messung der Viskosität:

Die Bestimmung der Viskosität erfolgte mittels eines Stabinger Rotationsviskosimeters SVM3000 der Fa. Anton Paar bei 25 °C (Standard) sowie im Temperaturbereich von -40 °C bis +90 °C.

### 4. Ermittlung der kritischen Temperatur

Die kritische Temperatur wurde durch Untersuchung der Dichten im CSP-relevanten Temperaturbereich von 300 bis 450 °C bestimmt. Die Fluide (je 50 mL) wurden hierzu in einer Hochdruck- und Hochtemperaturmesszelle der Fa. LTP GmbH auf Temperaturen zwischen 50 und 450 °C erwärmt und über einen Druckzylinder mit 10 bis 50 bar Druck belastet. Bei konstanter Temperatur wurde das jeweilige Druckintervall untersucht. Aus der resultierenden Volumenänderung des Fluids unter definiertem Druck gegenüber dem Messzellvolumen konnte die jeweilige Dichte bestimmt werden. Der Fehler der Methode liegt zwischen 1 und 5 %. Ein Einbruch der Dichte offenbart die kritische Temperatur der untersuchten Fluide.

### 5. Methylpolysiloxan-Mischungen:

Es wurden verschiedene Methylpolysiloxanmischungen mit definiertem M:D-Verhältnis eingesetzt und analysiert (vgl. Tabelle 2 und 4) :
VB1 (nicht erfindungsgemäß, M:D = 1:4) = lineares Polydimethylsiloxan mit einer Viskosität von ca. 5 mPa*s, kommerziell erhältlich bei Wacker Chemie AG als HELISOL^{®} 5A
Beispiel 1 (M:D = 1:15,5) = im Wesentlichen lineares Polydimethylsiloxan mit einer Zusammensetzung wie in Tabelle 2.
Beispiel 2 (M:D = 1:18) = im Wesentlichen lineares Polydimethylsiloxan mit einer Zusammensetzung wie in Tabelle 2.
Beispiel 3 (M:D = 1:13,5), hergestellt aus 33,1 Gewichtsteilen WACKER^{®} AK5 (erhältlich bei Wacker Chemie AG) und 66,9 Gewichtsteilen eines D-Cyclengemisches aus 0,4 Gewichtsteilen D3, 58,1 Gewichtsteilen D4, 32,8 Gewichtsteilen D5, und 8,7 Gewichtsteilen D6. Die entsprechenden Cyclen sind kommerziell erhältlich.
Beispiel 4 (M:D = 1:17) = hergestellt aus 28,0 Gewichtsteilen WACKER^{®} AK5 und 72 Gewichtsteilen eines D-Cyclengemisches aus 0,4 Gewichtsteilen D3, 58,1 Gewichtsteilen D4, 32,8 Gewichtsteilen D5, und 8,7 Gewichtsteilen D6. Die entsprechenden Cyclen sind kommerziell erhältlich.

### 6. Äquilibrierung von Methylpolysiloxanmischungen:

Es wurden jeweils 2-2,3 Liter der jeweiligen Methylpolysiloxanmischung mit definiertem M:D-Verhältnis in einen Edelstahl-Autoklav (5,4 Liter Gesamtvolumen, mit analogem und digitalem Druckaufnehmer und Widerstands-Mantelheizung mit Temperaturfühler) gefüllt. Der Autoklav wurde anschließend gasdicht verschlossen. Nach mehrmaligem Entgasen im Vakuum (3 × 20 mbar, jeweils 3 Minuten) wurden die Mischungen mit Argonatmosphäre (1 bar) überschichtet. Der Autoklav wurde für 30 Tage auf 425 °C (Innentemperatur) erhitzt, um das thermodynamische Gleichgewicht der Methylpolysiloxanmischungen zu erhalten.

Das M:D-Verhältnis veränderte sich dadurch nicht (überprüft mittels ²⁹Si-NMR), die molekulare Zusammensetzung der Methylpolysiloxanmischungen aufgrund der Äquilibrierung schon. Die so erhaltenen äquilibrierten Methylpolysiloxanmischungen wurden zur weiteren Untersuchung (GC, GPC, HPLC, Viskosität) verwendet (vgl. Tabelle 3 und 4).

**Tabelle 2: Zusammensetzung der Ausgangsmischungen**

| **Ausgangsmischungen** | | | | | |
|---|---|---|---|---|---|
| Gew% | | | | | |
| | **VB1 a)** | **B1 a)** | **B2 a)** | **B3 a)** | **B4 a)** |
| M:D | 1 : 4 | 1:15,5 | 1:18 | 1:13,5 | 1:17 |
| Si2 | | | | | |
| D3 | | | | 0,272 | 0,591 |
| Si3 | | | | 0,000 | 0,000 |
| D4 | 0,000 | 0,004 | 0,008 | 38,700 | 44,648 |
| Si4 | 0,000 | 0,000 | 0,001 | 0,000 | 0,000 |
| D5 | 0,006 | 0,010 | 0,023 | 21,807 | 20,675 |
| Si5 | 8,447 | 0,006 | 0,009 | 2,741 | 2,307 |
| D6 | 0,784 | 0,011 | 0,292 | 6,075 | 5,792 |
| Si6 | 9, 442 | 0,024 | 0,031 | 3,046 | 2,574 |
| D7 | 0, 184 | 0,011 | 0,024 | 0,593 | 0, 947 |
| Si7 | 9, 051 | 0, 128 | 0, 106 | 2,904 | 2,456 |
| D8 | 0,061 | 0,013 | 0,026 | 0,031 | 0,020 |
| Si8 | 8, 488 | 0,390 | 0,267 | 2,741 | 2,316 |
| D9 | 0,031 | 0,021 | 0,034 | 0,017 | 0,013 |
| Si9 | 7,819 | 0,889 | 0,529 | 2,526 | 2,135 |
| D10 | 0,019 | 0,063 | 0,045 | 0,015 | 0,010 |
| SilO | 7,095 | 1,588 | 0,857 | 2,295 | 1,941 |
| D11 | 0,013 | 0,095 | 0,055 | 0,000 | 0,009 |
| Si11 | 6,375 | 2,268 | 1,151 | 2,066 | 1,748 |
| D12 | 0,012 | 0,111 | 0,054 | 0,000 | 0,000 |
| Si12 | 5, 683 | 2,787 | 1,387 | 1,848 | 1,562 |
| D13 | 0,012 | 0,033 | 0,057 | 0,000 | 0,000 |
| Si13 | 5,028 | 3, 093 | 1,564 | 1, 640 | 1,386 |
| D14 | 0,012 | 0,032 | 0,067 | 0,000 | 0,000 |
| Si14 | 4,425 | 3,243 | 1,687 | 1,448 | 1,223 |
| D15 | 0,013 | 0,030 | 0,062 | 0,000 | 0,000 |
| Si15 | 3, 874 | 3,285 | 1,783 | 1,272 | 1,074 |
| D16 | 0,017 | 0,024 | 0,058 | 0,000 | 0,000 |
| Si16 | 3,384 | 3,231 | 1,832 | 1, 109 | 0, 937 |
| D17 | 0,048 | 0,021 | 0,050 | 0,000 | 0,000 |
| Si17 | 2, 924 | 3, 189 | 1,955 | 0, 971 | 0,801 |
| D18 | 0,040 | 0,015 | 0,036 | 0,000 | 0,000 |
| Si18 | 2,567 | 3,322 | 1,964 | 0,840 | 0,700 |
| Si19 | 0,003 | 3,229 | 2,019 | 0,724 | 0,602 |
| Si20 | 2,198 | 3, 199 | 1, 907 | 0,639 | 0,536 |
| Si21 | 1,849 | 2, 943 | 2,000 | 0,581 | 0,459 |
| Si22 | 1,705 | 3,018 | 2,018 | 0,460 | 0,438 |
| Si23 | 1,554 | 2,885 | 2,122 | 0,449 | 0,355 |
| Si24 | 1,329 | 2,806 | 2, 149 | 0,426 | 0,328 |
| Si25 | 1,039 | 2,668 | 2,030 | 0,385 | 0,313 |
| Si26 | 0,903 | 2,505 | 1,904 | 0,376 | 0,298 |
| Si27 | 0,890 | 2, 617 | 2,005 | 0,347 | 0,291 |
| Si28 | 0,731 | 2,379 | 2,066 | 0,327 | 0,261 |
| Si29 | 0,726 | 2,311 | 1, 970 | 0,327 | 0,256 |
| Si30 | 0, 634 | 2,170 | 1, 940 | | |
| Si31 | 0,582 | 2,189 | 2,032 | | |
| Si32 | | 2, 117 | 1,936 | | |
| Si33 | | 1,963 | 2,110 | | |
| Si34 | | 1,799 | 2,024 | | |
| Si35 | | 1,705 | 1,928 | | |
| Si36 | | 1,689 | 2,003 | | |
| Si37 | | 1,611 | 1, 814 | | |
| Si38 | | 1,574 | 1,779 | | |
| Si39 | | 1,439 | 1,865 | | |
| Si40 | | 1,391 | 1,779 | | |
| Si41 | | 1,299 | 1,725 | | |
| Si42 | | 1,210 | 1, 667 | | |
| Si43 | | 1, 144 | 1,697 | | |
| Si44 | | 1,072 | 1,737 | | |
| Si45 | | 1,010 | 1, 648 | | |
| Si46 | | 1,042 | 1,636 | | |
| Si47 | | 1,010 | 1,492 | | |
| Si48 | | 0,809 | 1,570 | | |
| Si49 | | 0,935 | 1,485 | | |
| Si50 | | 0,752 | 1,559 | | |
| Si51 | | 0,714 | 1,338 | | |
| Si52 | | 0,675 | 1,296 | | |
| Si53 | | 0,666 | 1,327 | | |
| Si54 | | 0,605 | 1,280 | | |
| Si55 | | 0,570 | 1,184 | | |
| Si56 | | 0,540 | 1,102 | | |
| Si57 | | 0,595 | 1,083 | | |
| Si58 | | 0,546 | 1,014 | | |
| Si59 | | 0,485 | 1,050 | | |
| Si60 | | 0,493 | 1,098 | | |
| Si61 | | 0,456 | 0, 970 | | |
| Si62 | | 0,429 | 0, 882 | | |
| Si63 | | 0,423 | 0,845 | | |
| Si64 | | 0,431 | 0,805 | | |
| Si65 | | 0,379 | 0,740 | | |
| Si66 | | 0,373 | 0,713 | | |
| Si67 | | 0,364 | 0, 672 | | |
| Si68 | | 0,384 | 0,672 | | |
| Si69 | | 0,383 | 0, 664 | | |
| Si70 | | 0,324 | 0, 662 | | |
| Si71 | | 0,340 | 0, 640 | | |
| Si72 | | 0,370 | 0, 601 | | |
| Si73 | | 0,334 | 0, 634 | | |
| Si74 | | 0,348 | 0,520 | | |
| Si75 | | 0,345 | 0,504 | | |
| Si76 | | | 0,546 | | |
| Si77 | | | 0,598 | | |
| Si78 | | | 0,487 | | |
| Si79 | | | 0,442 | | |
| **Summe Cyclen** | 1,25 | 0,49 | 0,89 | 67,24 | 72,11 |

**Tabelle 3: Zusammensetzung der bei 425 °C äquilibrierten Mischungen im Gleichgewicht**

| **äquilibriert 1 Monat** @ **425 °C** | | | | | |
|---|---|---|---|---|---|
| Gew% | | | | | |
| | **VB1 b)** | **B1 b)** | **B2 b)** | **B3 b)** | **B4 b)** |
| **M:D** | 1: 4 | 1:15,5 | 1:18 | 1:13,5 | 1:17 |
| Si2 | 2,800 | 0,557 | 0,313 | 0,239 | 0,172 |
| D3 | 2,717 | 3,573 | 4,385 | 2,332 | 2,328 |
| Si3 | 4,871 | 1,016 | 0,612 | 0,456 | 0,344 |
| D4 | 15,569 | 20,590 | 23,206 | 14,046 | 14,275 |
| Si4 | 5,617 | 1,312 | 0,803 | 0,626 | 0,488 |
| D5 | 8,349 | 11,827 | 13,709 | 8,258 | 8,508 |
| Si5 | 5,712 | 1,479 | 0,912 | 0,740 | 0,571 |
| D6 | 2,051 | 3,683 | 4,180 | 2,681 | 2,813 |
| Si6 | 5,501 | 1,578 | 0,987 | 0,825 | 0,637 |
| D7 | 0,770 | 1,065 | 1,203 | 0,785 | 0,807 |
| Si7 | 5,218 | 1,655 | 1,054 | 0,898 | 0, 697 |
| D8 | 0,397 | 0,464 | 0,493 | 0,291 | 0,312 |
| Si8 | 4,843 | 1,708 | 1,110 | 0,976 | 0,762 |
| D9 | 0,310 | 0,334 | 0,321 | 0,175 | 0,178 |
| Si9 | 4,424 | 1,731 | 1,143 | 1,036 | 0,816 |
| D10 | 0,101 | 0,310 | 0,278 | 0,127 | 0,141 |
| Si10 | 3,980 | 1,728 | 1,162 | 1,086 | 0,865 |
| D11 | 0,044 | 0,080 | 0,102 | 0,109 | 0,122 |
| Si11 | 3,545 | 1,710 | 1,174 | 1,129 | 0,907 |
| D12 | 0,019 | 0,047 | 0,074 | 0,113 | 0,125 |
| Si12 | 3,147 | 1,709 | 1,203 | 1,159 | 0,937 |
| D13 | 0,001 | 0,044 | 0,070 | 0,125 | 0,140 |
| Si13 | 2,764 | 1, 667 | 1,224 | 1,185 | 0,969 |
| D14 | 0,011 | 0,041 | 0,070 | 0,142 | 0,154 |
| Si14 | 2,420 | 1,627 | 1,240 | 1,204 | 0, 989 |
| D15 | 0,004 | 0,040 | 0,066 | 0,000 | 0,000 |
| Si15 | 2,111 | 1,574 | 1,201 | 1,219 | 1,007 |
| D16 | 0,005 | 0,040 | 0,061 | 0,000 | 0,000 |
| Si16 | 1,833 | 1,560 | 1,189 | 1,204 | 1,017 |
| D17 | 0,000 | 0,031 | 0,052 | 0,000 | 0,000 |
| Si17 | 1,585 | 1,555 | 1,099 | 1,263 | 1,046 |
| D18 | 0,000 | 0,016 | 0,031 | 0,000 | 0,000 |
| Si18 | 1,419 | 1,320 | 1,164 | 1,235 | 1,283 |
| Si19 | 1,157 | 1,420 | 1,176 | 1,263 | 1,065 |
| Si20 | 0, 984 | 1,337 | 1,042 | 1,288 | 1,285 |
| Si21 | 0,923 | 1,294 | 1,088 | 1,273 | 1,168 |
| Si22 | 0,745 | 1,340 | 0,997 | 1,605 | 1,123 |
| Si23 | 0,612 | 1,182 | 1,060 | 1,329 | 1,232 |
| Si24 | 0,610 | 1,206 | 0,996 | 1,310 | 1,153 |
| Si25 | 0,569 | 1,254 | 1,078 | 1,295 | 1,178 |
| Si26 | 0,437 | 1,234 | 1,041 | 1,329 | 1,239 |
| Si27 | 0,421 | 1,018 | 1,112 | 1,374 | 1,502 |
| Si28 | 0,423 | 1,143 | 0,855 | 1,554 | 1,306 |
| Si29 | 0,349 | 1,027 | 0,901 | 1,540 | 1,509 |
| Si30 | 0,339 | 0,906 | 0,919 | 1,510 | 1,478 |
| Si31 | 0,290 | 0,903 | 1,050 | 1,532 | 1,484 |
| Si32 | | 0,893 | 0,838 | 1,447 | 1,473 |
| Si33 | | 0,880 | 0,867 | 1,408 | 1,238 |
| Si34 | | 0,848 | 0,888 | 1,380 | 1,395 |
| Si35 | | 0,830 | 0,782 | 1,381 | 1,411 |
| Si36 | | 0,746 | 0,874 | 1,302 | 1,348 |
| Si37 | | 0,751 | 0,757 | 1,303 | 1,327 |
| Si38 | | 0,733 | 0, 968 | 1,225 | 1,279 |
| Si39 | | 0,742 | 0,827 | 1,197 | 1,256 |
| Si40 | | 0,657 | 0,858 | 1,177 | 1,266 |
| Si41 | | 0, 679 | 0,770 | 1,120 | 1,203 |
| Si42 | | 0,647 | 0,771 | 1,091 | 1,155 |
| Si43 | | 0,638 | 0,758 | 1,093 | 1,148 |
| Si44 | | 0,583 | 0,724 | 1,045 | 1,081 |
| Si45 | | 0,575 | 0,790 | 1,021 | 1,050 |
| Si46 | | 0,514 | 0, 687 | 0,972 | 1,049 |
| Si47 | | 0,519 | 0,627 | 0,913 | 1,032 |
| Si48 | | 0,527 | 0,657 | 0,907 | 1,024 |
| Si49 | | 0,501 | 0, 697 | 0,872 | 0,980 |
| Si50 | | 0,469 | 0,570 | 0,864 | 0,961 |
| Si51 | | 0,507 | 0,498 | 0,834 | 0,962 |
| Si52 | | 0,464 | 0,638 | 0,820 | 0,939 |
| Si53 | | 0,437 | 0,653 | 0,760 | 0,874 |
| Si54 | | 0,440 | 0,488 | 0,768 | 0,879 |
| Si55 | | 0,469 | 0,472 | 0,737 | 0,910 |
| Si56 | | 0,503 | 0,468 | 0, 688 | 0,815 |
| Si57 | | 0,372 | 0,490 | 0,657 | 0,800 |
| Si58 | | 0,401 | 0,523 | 0,653 | 0,800 |
| Si59 | | 0,353 | 0,485 | 0,624 | 0,779 |
| Si60 | | 0,383 | 0,481 | 0,606 | 0,719 |
| Si61 | | | 0,426 | 0,614 | 0,737 |
| Si62 | | | 0,461 | 0,594 | 0,707 |
| Si63 | | | | 0,547 | 0, 694 |
| Si64 | | | | 0,520 | 0,653 |
| Si65 | | | | 0,523 | 0,616 |
| Si66 | | | | 0,515 | 0,607 |
| Si67 | | | | 0,476 | 0,602 |
| Si68 | | | | 0,468 | 0,576 |
| Si69 | | | | 0,462 | 0,557 |
| Si70 | | | | 0,456 | 0,545 |
| Si71 | | | | 0,437 | 0,520 |
| Si72 | | | | 0,435 | 0,508 |
| Si73 | | | | 0,402 | 0,476 |
| Si74 | | | | 0,410 | 0,473 |
| Si75 | | | | 0,408 | 0,443 |
| **Summe Cyclen** | 30,35 | 42,18 | 48,30 | 29, 18 | 29,90 |

**Tabelle 4: Übersicht über die Mischungen vor und nach der Äquilibrierung**

| | **Molares M:D-Verhältnis** | **Cyclen / Gew%** | ***M̅ₙ* / g / mol** | ***M̅_{w}* / g / mol** | **Polydispersität** | **Viskosität / mPas** | **Druck bei 425°C/ Füllgrad** | **Kritische Temperatur/°C** |
|---|---|---|---|---|---|---|---|---|
| **Ausgangsmischungen** | | | | | | | | |
| VB1 a) | 1 : 4 | 1,25 | 862 | 954 | 1,11 | 5,1 | - | - |
| B1 a) | 1: 15,5 | 0,49 | 179 3 | 254 9 | 1,42 | 19,5 | - | - |
| B2 a) | 1:18 | 0,89 | 245 0 | 407 7 | 1,66 | 33,7 | - | - |
| B3 a) | 1: 13,5 | 67,2 | 390 | 568 | 1,46 | 4, 8 | - | - |
| B4 a) | 1:17 | 72,1 | 333 | 439 | 1,32 | 3,4 | - | - |

| **Äquilibrierte Mischungen** | | | | | | | | |
|---|---|---|---|---|---|---|---|---|
| VB1 b) | 1 : 4 | 30, 4 | 427 | 746 | 1,75 | 3,21 | 23 bar / 44% | 400 °C |
| B1 b) | 1: 15,5 | 42,2 | 541 | 150 7 | 2,78 | 8,92 | 15,8 bar / 44% | 440 °C |
| B2 b) | 1:18 | 48,3 | 557 | 202 7 | 3,64 | 11,2 | 15,0 bar / 47% | > 450 °C |
| B3 b) | 1: 13,5 | 29,2 | 618 | 248 8 | 4,03 | 11,7 | 16, 1 bar / 45% | > 450 °C |
| B4 b) | 1:17 | 29,9 | 667 | 498 8 | 7,47 | 14,5 | 15,9 bar / 48% | > 450 °C |

Durch die Äquilibrierung im Laborversuch entstehen aus den Ausgangsmischungen Methylpolysiloxanmischungen, die eine zum CSP-Kraftwerksbetrieb vergleichbare Zusammensetzung aufweisen.

Als Konsequenz hiervon ist der Viskositätsabfall der Mischungen B1 und B2 deutlich ausgeprägter (VB1: Rückgang um 38 %, B1: Rückgang um 62 %, B2: Rückgang um 65%) als bisher bekannt. Gleichzeitig ist der Dampfdruck der äquilibrierten Gemische geringer als bei dem niedermolekularen Öl des Vergleichsbeispiels (B1: 15,8 bar, B2: 15,0 bar; VB1: 23 bar), obwohl die Mischungen B1 und B2 deutlich mehr leichtsiedende Cyclen bilden (B1: 42,18 Gew.-%, B2: 48,3 Gew.-%; vgl. VB1: 30,4 Gew.-%).

Die Mischungen B3 und B4 zeigen bei der Viskosität einen gegenläufigen Trend: Die Viskosität steigt bei der Äquilibrierung an, bleibt jedoch unter einem Wert von 20 mPa*s. Der Dampfdruck der äquilibrierten Gemische B3 und B4 ist aber ebenfalls geringer als bei dem niedermolekularen Öl des Vergleichsbeispiels.

Des Weiteren zeigen die Messungen, dass alle untersuchten Methylpolysiloxangemische im Bereich der Betriebstemperatur noch unterkritisch sind.

Es hat sich gezeigt, dass bei einem Anfahrprozess, in dem die Betriebstemperatur des genutzten Wärmeträgers stufenweise der gewünschten maximalen Betriebstemperatur der Anlage herangeführt wird, verhindert, dass der maximale Betriebsdruck in der Äquilibrierungsphase nicht überschritten wird.

## Patentansprüche

1. Verwendung von Methylpolysiloxanmischungen, die
(a) lineare Methylpolysiloxane **MDₓM** enthalten, worin **x** eine ganze Zahl ist mit 0 ≤ **x** ≤ 100, und wobei die Mischungen ein molares M:D-Verhältnis von 1:15,5 bis 1:30 aufweisen; oder
(b) lineare Methylpolysiloxane **MDₓM,** worin **x** eine ganze Zahl ist mit 0 ≤ **x** ≤ 80 und cyclische Dimethylpolysiloxane **D_{y},** worin **y** eine ganze Zahl ≥ 3 ist, enthalten, wobei die Summe der Anteile aller cyclischen Dimethylpolysiloxane **D_{y}** 10-95 Gew.-% beträgt, und wobei die Mischungen ein molares M:D-Verhältnis von 1:10,5 bis 1:30 aufweisen,
als Wärmeträgerfluid in solarthermischen Kraftwerken (CSP) mit Betriebstemperaturen in einem Bereich von 300 bis 500 °C.

2. Verwendung nach Anspruch 1, wobei für die Methylpolysiloxanmischungen gilt:
(a) die Mischungen weisen ein molares M:D-Verhältnis von 1:15,5-1:25 auf; oder
(b) die Mischungen enthalten lineare Methylpolysiloxane **MDₓM,** worin **x** eine ganze Zahl ist mit 0 ≤ **x** ≤ 29, und cyclische Dimethylpolysiloxane **D_{y},** worin **y** eine ganze Zahl ist mit 3 ≤ **y** ≤10, wobei die Summe der Anteile aller cyclischen Dimethylpolysiloxane **D_{y}** in einem Bereich von 60-80 Gew.-% liegt, und wobei die Mischungen ein molares M:D-Verhältnis von 1:11 bis 1:20 aufweisen.

3. Verwendung nach Anspruch 1 oder 2, wobei für die Methylpolysiloxanmischungen gilt:
a) die Summe der Anteile aller cyclischen Dimethylpolysiloxane **Dy** liegt in einem Bereich von 0-1 Gew.-%, das Zahlenmittel ***M̅ₙ*** der Mischung liegt in einem Bereich von 400 bis 3000 g/mol und das Gewichtsmittel ***M̅_{w}*** der Mischung liegt in einem Bereich von 1000 bis 5000 g/mol; oder
b) die Mischungen enthalten lineare Methylpolysiloxane **MDₓM,** worin **x** eine ganze Zahl ist mit 0 ≤ **x** ≤ 29, und cyclische Dimethylpolysiloxane **D_{y},** worin **y** eine ganze Zahl ist mit 3 ≤ **y** ≤10, wobei die Summe der Anteile aller cyclischen Dimethylpolysiloxane **D_{y}** in einem Bereich von 60-80 Gew.-% liegt, und wobei die Mischungen ein molares M:D-Verhältnis von 1:11 bis 1:20 aufweisen und das Zahlenmittel ***M̅ₙ*** der Mischung in einem Bereich von 100 bis 2000 g/mol und das Gewichtsmittel ***M̅_{w}*** der Mischung in einem Bereich von 100 bis 6000 g/mol liegt, wobei Mn und Mw gemäß der Beschreibung gemessen werden.

4. Verwendung nach einem der Ansprüche 1-3, wobei die Mischungen höchstens 150 ppm T-Gruppen und höchstens 100 ppm Q-Gruppen enthalten.

5. Verwendung nach Anspruch 4, wobei die Mischungen höchstens 100 ppm T-Gruppen und keine Q-Gruppen enthalten.

6. Methylpolysiloxanmischungen, die lineare Methylpolysiloxane **MDₓM,** worin **x** eine ganze Zahl ist mit 0 ≤ **x** ≤ 80 und cyclische Dimethylpolysiloxane **D_{y},** worin **y** eine ganze Zahl ≥ 3 ist, enthalten, wobei die Summe der Anteile aller cyclischen Dimethylpolysiloxane **D_{y}** 10-95 Gew.-% beträgt, und wobei die Mischungen ein molares M:D-Verhältnis von 1:10,5 bis 1:30 aufweisen.

7. Methylpolysiloxanmischungen nach Anspruch 6, die lineare Methylpolysiloxane **MDₓM,** worin **x** eine ganze Zahl ist mit 0 ≤ **x** ≤ 29, und cyclische Dimethylpolysiloxane **D_{y},** worin **y** eine ganze Zahl ist mit 3 ≤ **y** ≤10, enthalten, wobei die Summe der Anteile aller cyclischen Dimethylpolysiloxane **D_{y}** in einem Bereich von 60-80 Gew.-% liegt, und wobei die Mischungen ein molares M:D-Verhältnis von 1:11 bis 1:20 aufweisen und das Zahlenmittel ***M̅ₙ*** der Mischungen in einem Bereich von 100 bis 2000 g/mol und das Gewichtsmittel ***M̅_{w}*** der Mischungen in einem Bereich von 100 bis 6000 g/mol liegt, wobei Mn und Mw gemäß der Beschreibung gemessen werden.

8. Methylpolysiloxanmischungen nach Anspruch 7, wobei das Zahlenmittel ***M̅ₙ*** der Mischungen in einem Bereich von 200 bis 1600 g/mol liegt und das Gewichtsmittel ***M̅_{w}*** der Mischungen in einem Bereich von 200 bis 2200 g/mol liegt, wobei Mn und Mw gemäß der Beschreibung gemessen werden.

9. Methylpolysiloxanmischungen nach Anspruch 8, wobei das Zahlenmittel ***M̅ₙ*** der Mischungen in einem Bereich von 250 bis 1400 g/mol liegt und das Gewichtsmittel ***M̅_{w}*** der Mischungen in einem Bereich von 250 bis 2000 g/mol liegt, wobei Mn und Mw gemäß der Beschreibung gemessen werden.

10. Methylpolysiloxanmischungen nach einem der Ansprüche 6-9 wobei die Mischungen höchstens 150 ppm T-Gruppen und höchstens 100 ppm Q-Gruppen enthalten.

11. Methylpolysiloxanmischungen nach Anspruch 10, wobei die Mischungen höchstens 100 ppm T-Gruppen und keine Q-Gruppen enthalten.

12. Verfahren zum Betreiben einer CSP-Anlage, **dadurch gekennzeichnet, dass** Methylpolysiloxanmischungen nach einem der Ansprüche 6-11 als Wärmeträgerfluid eingesetzt werden und die Temperatur beim Anfahren der Anlage stufenweise erhöht wird bis die Betriebstemperatur erreicht ist.

13. Verfahren nach Anspruch 12, **dadurch gekennzeichnet, dass** das stufenweise Anfahren die folgenden Schritte umfasst:
a) Einstellung einer Starttemperatur, die 100 bis 200 °C unterhalb der maximalen Betriebstemperatur liegt, jedoch mindestens 100°C beträgt;
b) Halten der Starttemperatur bis ein konstanter Betriebsdruck für mindestens 3 Stunden eingehalten wird;
c) Erhöhung der Betriebstemperatur um einen Wert in einem Bereich von 5 bis 150 °C;
d) Halten der Temperatur bis ein konstanter Betriebsdruck für mindestens 3 Stunden eingehalten wird;
e) Wiederholen der Schritte c) und d) bis die maximale Betriebstemperatur erreicht ist.

## Claims

1. Use of methylpolysiloxane mixtures which
(a) comprise linear methylpolysiloxanes **MDₓM** in which **x** is an integer with 0 ≤ **x** ≤ 100, and where the mixtures have a molar M:D ratio of 1:15.5 to 1:30; or
(b) comprise linear methylpolysiloxanes **MDₓM** in which **x** is an integer with 0 ≤ **x** ≤ 80 and cyclic dimethylpolysiloxanes **D_{y}** in which **y** is an integer ≥ 3, wherein the sum of the fractions of all cyclic dimethylpolysiloxanes **D_{y}** is 10-95 wt%, and where the mixtures have a molar M:D ratio of 1:10.5 to 1:30, as heat transfer fluid in solar thermal power stations (CSP) with operating temperatures in a range from 300 to 500°C.

2. Use according to Claim 1, where in respect of the methylpolysiloxane mixtures:
(a) the mixtures have a molar M:D ratio of 1:15.5-1:25; or
(b) the mixtures comprise linear methylpolysiloxanes **MDₓM** in which **x** is an integer with 0 ≤ **x** ≤ 29, and cyclic dimethylpolysiloxanes **D_{y}** in which **y** is an integer with 3 ≤ **y** ≤10, where the sum of the fractions of all cyclic dimethylpolysiloxanes **D_{y}** is in a range of 60-80 wt%, and where the mixtures have a molar M:D ratio of 1:11 to 1:20.

3. Use according to Claim 1 or 2, where in respect of the methylpolysiloxane mixtures:
a) the sum of the fractions of all cyclic dimethylpolysiloxanes **D_{y}** is in a range of 0-1 wt%, the number average ***M̅ₙ*** of the mixture is in a range from 400 to 3000 g/mol, and the weight average ***M̅_{w}*** of the mixture is in a range from 1000 to 5000 g/mol; or
b) the mixtures comprise linear methylpolysiloxanes **MDₓM** in which **x** is an integer with 0 ≤ **x** ≤ 29, and cyclic dimethylpolysiloxanes **D_{y}** in which **y** is an integer with 3 ≤ **y** ≤10, where the sum of the fractions of all cyclic dimethylpolysiloxanes **D_{y}** is in a range of 60-80 wt%, and where the mixtures have a molar M:D ratio of 1:11 to 1:20 and the number average ***M̅ₙ*** of the mixture is in a range from 100 to 2000 g/mol and the weight average ***M̅_{w}*** of the mixture is in a range from 100 to 6000 g/mol, where Mn and Mw are measured according to the description.

4. Use according to any of Claims 1-3, where the mixtures contain at most 150 ppm of T groups and at most 100 ppm of Q groups.

5. Use according to Claim 4, where the mixtures contain at most 100 ppm of T groups and no Q groups.

6. Methylpolysiloxane mixtures which comprise linear methylpolysiloxanes **MDₓM** in which **x** is an integer with 0 ≤ **x** ≤ 80 and cyclic dimethylpolysiloxanes **D_{y}** in which **y** is an integer ≥ 3, where the sum of the fractions of all cyclic dimethylpolysiloxanes **D_{y}** is 10-95 wt%, and where the mixtures have a molar M:D ratio of 1:10.5 to 1:30.

7. Methylpolysiloxane mixtures according to Claim 6, which comprise linear methylpolysiloxanes **MDₓM** in which **x** is an integer with 0 ≤ **x** ≤ 29, and cyclic dimethylpolysiloxanes **D_{y}** in which **y** is an integer with 3 ≤ **y** ≤10, where the sum of the fractions of all cyclic dimethylpolysiloxanes **D_{y}** is in a range of 60-80 wt%, and where the mixtures have a molar M:D ratio of 1:11 to 1:20 and the number average ***M̅ₙ*** of the mixtures is in a range from 100 to 2000 g/mol and the weight average ***M̅_{w}*** of the mixtures is in a range from 100 to 6000 g/mol, where Mn and Mw are measured according to the description.

8. Methylpolysiloxane mixtures according to Claim 7, wherein the number average ***M̅ₙ*** of the mixtures is in a range from 200 to 1600 g/mol and the weight average ***M̅_{w}*** of the mixtures is in a range from 200 to 2200 g/mol, where Mn and Mw are measured according to the description.

9. Methylpolysiloxane mixtures according to Claim 8, wherein the number average ***M̅ₙ*** of the mixtures is in a range from 250 to 1400 g/mol and the weight average ***M̅_{w}*** of the mixtures is in a range from 250 to 2000 g/mol, where Mn and Mw are measured according to the description.

10. Methylpolysiloxane mixtures according to any of Claims 6-9, where the mixtures contain at most 150 ppm of T groups and at most 100 ppm of Q groups.

11. Methylpolysiloxane mixtures according to Claim 10, where the mixtures contain at most 100 ppm of T groups and no Q groups.

12. Method for operating a CSP plant, **characterized in that** methylpolysiloxane mixtures according to any of Claims 6-11 are used as heat transfer fluid and the temperature during startup of the plant is gradually increased until the operating temperature is reached.

13. Method according to Claim 12, **characterized in that** the gradual startup comprises the following steps:
a) establishing a start temperature which is 100 to 200°C below the maximum operating temperature but is at least 100°C;
b) holding the start temperature until a constant operating pressure is maintained for at least 3 hours;
c) increasing the operating temperature by a value in a range from 5 to 150°C;
d) holding the temperature until a constant operating pressure is maintained for at least 3 hours;
e) repeating steps c) and d) until the maximum operating temperature is reached.

## Revendications

1. Utilisation de mélanges de méthylpolysiloxanes qui
(a) contiennent des méthylpolysiloxanes linéaires MDₓM, dans lesquels x est un nombre entier avec 0 ≤ x ≤ 100, et les mélanges présentant un rapport M : D molaire de 1 : 15,5 à 1 : 30 ; ou
(b) contiennent des méthylpolysiloxanes linéaires MDₓM, dans lesquels x est un nombre entier avec 0 ≤ x ≤ 80 et des diméthylpolysiloxanes cycliques D_{y}, dans lesquels y est un nombre entier ≥ 3, la somme des proportions de tous les diméthylpolysiloxanes cycliques D_{y} étant de 10 à 95 % en poids, et les mélanges présentant un rapport M : D molaire de 1 : 10,5 à 1 : 30,
en tant que fluide caloporteur dans des centrales thermiques solaires (CSP) à des températures d'exploitation dans une plage de 300 à 500 °C.

2. Utilisation selon la revendication 1, ceci s'appliquant aux mélanges de méthylpolysiloxanes :
(a) les mélanges présentent un rapport M : D molaire de 1 : 15,5 à 1 : 25 ; ou
(b) les mélanges contiennent des méthylpolysiloxanes linéaires MDₓM, dans lesquels x est un nombre entier avec 0 ≤ x ≤ 29 et des diméthylpolysiloxanes cycliques D_{y}, dans lesquels y est un nombre entier avec 3 ≤ y ≤ 10, la somme des proportions de tous les diméthylpolysiloxanes cycliques D_{y} se situant dans une plage de 60 à 80 % en poids, et les mélanges présentant un rapport M : D molaire de 1 : 11 à 1 : 20.

3. Utilisation selon la revendication 1 ou 2, ceci s'appliquant aux mélanges de méthylpolysiloxanes :
a) la somme des proportions de tous les diméthylpolysiloxanes cycliques D_{y} se situe dans une plage de 0 à 1 % en poids, la moyenne numérique ***M̅ₙ*** du mélange se situe dans une plage de 400 à 3 000 g/mole et la moyenne pondérale ***M̅_{w}*** du mélange se situe dans une plage de 1 000 à 5 000 g/mole ; ou
b) les mélanges contiennent des méthylpolysiloxanes linéaires MDₓM, dans lesquels x est un nombre entier avec 0 ≤ x ≤ 29 et des diméthylpolysiloxanes cycliques D_{y}, dans lesquels y est un nombre entier avec 3 ≤ y ≤ 10, la somme des proportions de tous les diméthylpolysiloxanes cycliques D_{y} se situant dans une plage de 60 à 80 % en poids, et les mélanges présentant un rapport M : D molaire de 1 : 11 à 1 : 20 et la moyenne numérique ***M̅ₙ*** du mélange se situant dans une plage de 100 à 2 000 g/mole et la moyenne pondérale ***M̅_{w}***. du mélange se situant dans une plage de 100 à 6 000 g/mole, Mn et Mw étant mesurés selon la description.

4. Utilisation selon l'une quelconque des revendications 1 à 3, les mélanges contenant au plus 150 ppm de groupes T et au plus 100 ppm de groupes Q.

5. Utilisation selon la revendication 4, les mélanges contenant au plus 100 ppm de groupes T et aucun groupe Q.

6. Mélanges de méthylpolysiloxanes qui contiennent des méthylpolysiloxanes linéaires MDₓM, dans lesquels x est un nombre entier avec 0 ≤ x ≤ 80 et des diméthylpolysiloxanes cycliques D_{y}, dans lesquels y est un nombre entier ≥ 3, la somme des proportions de tous les diméthylpolysiloxanes cycliques D_{y} étant de 10 à 95 % en poids, et les mélanges présentant un rapport M : D molaire de 1 : 10,5 à 1 : 30.

7. Mélanges de méthylpolysiloxanes selon la revendication 6, qui contiennent des méthylpolysiloxanes linéaires MDₓM, dans lesquels x est un nombre entier avec 0 ≤ x ≤ 29 et des diméthylpolysiloxanes cycliques D_{y}, dans lesquels y est un nombre entier avec 3 ≤ y ≤ 10, la somme des proportions de tous les diméthylpolysiloxanes cycliques D_{y} se situant dans une plage de 60 à 80 % en poids, et les mélanges présentant un rapport M : D molaire de 1 : 11 à 1 : 20 et la moyenne numérique ***M̅ₙ*** des mélanges se situe dans une plage de 100 à 2 000 g/mole et la moyenne pondérale ***M̅_{w}*** des mélanges se situe dans une plage de 100 à 6 000 g/mole, Mn et Mw étant mesurés selon la description.

8. Mélanges de méthylpolysiloxanes selon la revendication 7, la moyenne numérique ***M̅ₙ*** des mélanges se situant dans une plage de 200 à 1 600 g/mole et la moyenne pondérale ***M̅_{w}*** des mélanges se situant dans une plage de 200 à 2 200 g/mole, Mn et Mw étant mesurés selon la description.

9. Mélanges de méthylpolysiloxanes selon la revendication 8, la moyenne numérique ***M̅ₙ*** des mélanges se situant dans une plage de 250 à 1 400 g/mole et la moyenne pondérale ***M̅_{w}*** des mélanges se situant dans une plage de 250 à 2 000 g/mole, Mn et Mw étant mesurés selon la description.

10. Mélanges de méthylpolysiloxanes selon l'une quelconque des revendications 6 à 9, les mélanges contenant au plus 150 ppm de groupes T et au plus 100 ppm de groupes Q.

11. Mélanges de méthylpolysiloxanes selon la revendication 10, les mélanges contenant au plus 100 ppm de groupes T et aucun groupe Q.

12. Procédé d'exploitation d'une installation de CSP, **caractérisé en ce que** des mélanges de méthylpolysiloxanes selon l'une quelconque des revendications 6 à 11 sont utilisés en tant que fluide caloporteur et la température lors du démarrage de l'installation est augmentée par étapes jusqu'à ce que la température d'exploitation soit atteinte.

13. Procédé selon la revendication 12, **caractérisé en ce que** le démarrage par étapes comprend les étapes suivantes :
a) ajustement d'une température de départ, qui se situe 100 à 200 °C en dessous de la température d'exploitation maximale, mais qui est d'au moins 100 °C ;
b) maintien de la température de départ jusqu'à ce qu'une pression d'exploitation constante soit maintenue pendant au moins 3 heures ;
c) élévation de la température d'exploitation d'une valeur dans une plage de 5 à 150 °C ;
d) maintien de la température jusqu'à ce qu'une pression d'exploitation constante soit maintenue pendant au moins 3 heures ;
e) répétition des étapes c) et d) jusqu'à ce que la température d'exploitation maximale soit atteinte.
